# EUROPEAN PATENT APPLICATION

(11) **EP 4 513 485 A1**
(43) Date of publication of application: **26.02.2025**
(21) Application number: 22938639.6
(22) Date of filing: 10.06.2022
(51) Int. Cl.: G11B 33/12, G11B 20/10, H04M 1/21, H04R 1/08, H04R 17/02

(54) **SMARTPHONE RECORDER**

(30) Priority: 20.04.2022 KR 20220048899
(71) Applicant: Mune Co., Ltd., Seoul 03722 (KR)
(72) Inventor: OH, Kwang-Bin, Seoul 04178 (KR); JEONG, Jae-Hak, Goyang-si Gyeonggi-do 10335 (KR); KIM, Nam-Young, Gijang-gun Busan 46004 (KR); PARK, Dong-Kyu, Suwon-si Gyeonggi-do 16425 (KR); KIM, You-Hwa, Hongseong-gun Chungcheongnam-do 32218 (KR); SONG, In-Jeong, Seoul 03505 (KR); KIM, Ju-Han, Goyang-si Gyeonggi-do 10322 (KR)
(74) Representative: Zacco Sweden AB
(86) International application number: PCT/KR2022/008255
(87) International publication number: WO 2023/204348

(57) **Abstract**

The present invention relates to a smartphone recorder. The smartphone recorder according to an embodiment of the present invention comprises: a case body comprising a front cover attachable to/detachable from the rear surface of a smartphone and a rear case which is coupled to the rear portion of the front cover and has an accommodation space therein; a magnet which attaches the front cover to the rear surface of the smartphone by using magnetism; an input unit which receives an input of speech information during making a call via the smartphone; and a recording portion which records the speech information input to the input unit.

## Description

### FIELD

Embodiments of the present disclosure relate to a smartphone recorder.

### RELATED ART

Among the smartphones that are released under the popularity and used by a plurality of users, there is a smartphone that does not provide a call recording function due to the manufacturer's policy, and a representative example thereof is an iPhone.

However, a large number of smartphone users (e.g. a company, a child, etc.) require to record a call. However, since a call recording function is not provided in the smartphone itself, the user should cope therewith on her/his own. This is complicated and inconvenient.

For example, a user of a smartphone that does not provide a recording function, that is, an iPhone user, records a call content using a separately prepared recorder while calling using a speakerphone function, or records a call content with a third party app or a call recorder.

As such, the demand for a call recording app or products is steadily present. However, there are many user reviews that it inconvenient to use the existing app or products for call recording, or the design of the existing app or products for call recording is unsatisfactory.

Accordingly, there is a need for development of a smartphone recorder, in which the smartphone recorder can be removably attached to a smartphone, for example, an iPhone, on which a call recording function is not mounted without using a complex coupling structure so as to improve user convenience, and the smartphone recorder does not deteriorate the aesthetics of the design and achieves a high-quality call recording function when being attached to the smartphone, thereby enhancing user satisfaction.

As a prior art related to the present disclosure, Korean Utility Model Application Publication No. 20-2019-0001823 (hereinafter, referred to as a prior art document) is disclosed. A communication terminal-coupled recording terminal is disclosed in the prior art document.

However, the conventional recording terminal has a disadvantage in that a structure in which the recording terminal is connected and coupled to the communication terminal is complicated such that it is difficult to mount the recording terminal on the communication terminal. Further, in the conventional recording terminal, a voice is recorded using a microphone exposed to the outside. Thus, external noise is introduced thereto during the call recording.

### DISCLOSURE

### TECHNICAL PURPOSE

A purpose of the present disclosure is to provide a smartphone recorder, in which the smartphone recorder can be removably attached to a smartphone, for example, an iPhone, on which a call recording function is not mounted without using a complex coupling structure so as to improve user convenience, and the smartphone recorder does not deteriorate the aesthetics of the design and achieves a high-quality call recording function when being attached to the smartphone, thereby enhancing user satisfaction.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

A smartphone recorder according to an embodiment of the present disclosure includes a casing body including: a front cover attachable to and detachable from a rear surface of a smartphone; and a rear casing coupled to a rear surface of the front cover and having a receiving space defined therein; a magnet for attaching the front cover to the rear surface of the smartphone using a magnetic force; an input unit for receiving voice information during a call of the smartphone; and a recording unit for recording the voice information input to the input unit.

the input unit includes at least one of: a microphone for receiving the voice information; and a piezoelectric sensor configured to receive the voice information as vibration data.

The piezoelectric sensor is configured to receive the voice information transferred through the rear surface of the smartphone during the call as the vibration data when the front cover is attached to the rear surface of the smartphone, wherein the recording unit is configured to receive the vibration data input from the piezoelectric sensor, to convert the vibration data into voice data, and to collect the converted voice data.

The magnet includes: a first magnet positioned on an upper portion of the front cover; and a second magnet positioned on a lower portion of the front cover.

The first magnet is attached to an upper portion of an outer surface of the front cover, and has a ring shape having a diameter corresponding to a left-right directional width of the front cover, wherein the second magnet is attached to a lower portion of the outer surface of the front cover, and is formed in a bar shape vertically extending in an elongate manner so as to have a predetermined length and is positioned at a center in a left-right direction of the front cover, wherein a metal sticker is attached to an outer surface of each of the first magnet and the second magnet.

The magnet includes: a first magnet positioned in an upper portion of the receiving space; and a second magnet positioned in a lower portion of the receiving space.

The first magnet is in close contact with an upper portion of an inner surface of the front cover, and has a ring shape having a diameter corresponding to a left-right directional width of the front cover.

The second magnet is in close contact with a lower portion of the inner surface of the front cover, and is formed in a bar shape vertically extending in an elongate manner so as to have a predetermined length and is positioned at a center in a left-right direction of the front cover.

A first magnet tape may adhere the first magnet to the upper portion of the inner surface of the front cover. A second magnet tape may adhere the second magnet to the lower portion of the inner surface of the front cover. The first magnet tape may have a ring shape having a diameter corresponding to that of the first magnet, and the second magnet tape may have a bar shape having a length corresponding to that of the second magnet.

The piezoelectric sensor includes a sensor surface located in the receiving space and in close contact with the inner surface of the front cover.

The piezoelectric sensor may be positioned in a hollow defined in the first magnet. Accordingly, the piezoelectric sensor positioned in the hollow defined in the first magnet can accurately read the vibration directly through the inner surface of the front cover in close contact to the rear surface of the smartphone via the first magnet without being disturbed with surrounding noise, thereby improving call recording quality.

In addition, the piezoelectric sensor may further include a sensor tape to allow the piezoelectric sensor to be positioned in the inner hollow of the first magnet and adhere the piezoelectric sensor to the inner surface of the front cover. The sensor tape may have a circular shape having a diameter corresponding to that of the sensor surface. As such, the sensor tape may allow the piezoelectric sensor to be positioned in the inner hollow of the first magnet and firmly adhere the piezoelectric sensor to the inner surface of the front cover, such that the accuracy of the piezoelectric sensor may be improved, and the call voice recording quality may be improved.

The smartphone recorder may further include a sensor fixing structure configured to position the piezoelectric sensor at a set position in the inner hollow of the first magnet and firmly fasten the piezoelectric sensor thereto. The sensor fixing structure includes a first sensor fixing structure protruding outwardly from a position of an outer circumference of the piezoelectric sensor such that a distal end thereof is in contact with an inner circumferential surface of the first magnet; and a second sensor fixing structure protruding outwardly from another position of the outer circumference of the piezoelectric sensor, wherein the first sensor fixing structure and the second sensor fixing structure are arranged in a symmetrical manner with each other around a center of the piezoelectric sensor.

The recording unit includes: a circuit board located in the receiving space and configured to collect the vibration data input to the piezoelectric sensor and to convert the vibration data into the voice data; a switch electrically connected to the circuit board and configured to turn on/off a recording operation; a communication terminal electrically connected to the circuit board; and data storage for storing therein the voice data converted by the circuit board.

The data storage includes a data storage socket electrically connected to the circuit board and a data storage medium mountable into the data storage socket. The data storage medium may be a flash memory card, for example, an SD credit card.

The communication terminal may be positioned at a center of a lower end of the rear casing and the feedback unit may be spaced from the communication terminal from a predefined spacing and may be exposed to an outside. For example, the communication terminal may be an 8-pin lightning mount. However, the present disclosure is not necessarily limited thereto, and communication terminals of various other standards may be used.

The smartphone recorder according to an embodiment of the present disclosure includes a battery which is located in the receiving space and supplies power to the recording unit and the piezoelectric sensor.

The smartphone recorder according to an embodiment of the present disclosure includes the feedback unit electrically connected to the circuit board and configured to provide feedback about a recording operation and a charged state of the battery. The feedback unit includes at least one LED that may emit or turn on/off light of a predetermined color (e.g. red, etc.).

The switch may move in a sliding manner in a predefined direction to turn on/off the recording operation.

The switch may be installed at an upper end of one side of the circuit board. For example, when the piezoelectric sensor is positioned in a position closer to a left side of the rear casing, the switch may be positioned close to an upper corner of a right side of the rear casing while being spaced by a predetermined distance from the piezoelectric sensor. Accordingly, the user can easily slide the switch using one finger while the smartphone recorder is attached to the rear surface of the smartphone.

The switch may include: a switch body and the slide button. The switch body may include the inclined guide hole extending in the diagonal direction and positioned closer to the upper end of the rear casing. The slide button may extend through the inclined guide hole and protrude rearwardly, and may slidably move in the diagonal direction along the inclined guide hole to turn on/off the recording operation. Accordingly, when the user makes a call with a counterpart while holding the smartphone with one hand, the user may easily slide the slide button on the smartphone recorder attached to the rear surface of the smartphone in the diagonal direction. If the sliding direction of the slide button is the left-right width direction or the vertical-longitudinal direction of the rear casing, it is difficult to move the slide button in the left-right or up-down direction using one finger, in particular, an index finger, while gripping the smartphone with one hand. However, according to the embodiment of the present disclosure, the slide button does not move in the left-right or up-down direction of the smartphone, but the slide button can slidably move along the inclined guide hole extending in the diagonal direction, so that the slide button can be quickly and conveniently manipulated by using an index finger or the like without putting a stress on the joint of the finger of the user.

The smartphone recorder according to an embodiment of the present disclosure further includes a switch holder for fixing the switch to the upper end of one side of the circuit board. The switch holder includes: a first holder and a second holder. The first holder extends diagonally along the movement direction of the slide button so as to stop the movement of one side of the switch body. The second holder is connected to one end of the first holder and extends in a direction perpendicular manner to the extending direction of the first holder. The switch main body is stably mounted onto the circuit board while being stopped by the switch holder. The switch is firmly supported by the switch holder in two-axis directions, thereby improving durability thereof even when the switch is repeatedly used.

In the smartphone recorder according to an embodiment of the present disclosure, the outer surface of the front cover of the casing body may be flat. The outer surface of the front cover may entirely and smoothy closely contact the rear surface of the smartphone.

The front cover may have a rectangular shape in which a vertical length is larger than a horizontal width length.

A plurality of first coupling protrusions protruding outwardly for coupling with the rear casing may be provided at an upper end and a lower end of the front cover. A plurality of second coupling protrusions protruding outwardly for coupling with the rear casing may be provided at both side ends of the front cover.

The inner surface of the front cover has a first close-contact receiving portion and a second close-contact receiving portion. In the first close-contact receiving portion, a first magnet of the magnet is adhered to a first magnet tape and the first magnet is in close contact with the inner surface of the front cover via the first magnet tape. In the second close-contact receiving portion, the second magnet of the magnet is adhered to a second magnet tape and the second magnet is in close contact with the inner surface of the front cover via the second magnet tape. In addition, a third close-contact receiving portion may be further provided on the inner surface of the front cover. In the third close-contact receiving portion, the piezoelectric sensor is adhered to a sensor tape and a sensor surface of the piezoelectric sensor is in close contact with the inner surface of the front cover via the sensor tape. Each of the first, second, and third close-contact receiving portions may have a size and a shape correspond to a size and a shape of each of the first and second magnets and the sensor surface of the piezoelectric sensor. Thus, each of the first and second magnets and the piezoelectric sensor may be stably disposed at a predetermined position and firmly attached to the inner surface of the front cover. Accordingly, an attachment force using the magnetic force by the first and second magnets and may be improved, and measurement accuracy of the piezoelectric sensor directly reading the rear vibration of the smartphone may be improved, thereby improving the function of recording the call voice. As a result, there is an advantage in that clean recording may be achieved without being disturbed with surrounding noise.

In addition, the third close-contact receiving portion may further include a circular protrusion surrounding an outer circumference of the sensor surface of the piezoelectric sensor in the circumferential direction thereof and supporting the sensor surface of the piezoelectric sensor along the circumferential direction thereof to prevent movement of the piezoelectric sensor. The circular protrusion may act as a structure of completely preventing a movement of the piezoelectric sensor such that the piezoelectric sensor is not shaken in up, down, left, and right directions within the casing body. Accordingly, the sensor surface of the piezoelectric sensor may be prevented from moving in the up, down, left, and right directions, such that the piezoelectric sensor more accurately reads the vibration transmitted through the rear surface of the smartphone. As a result, the smartphone recorder may accurately record the call voice without being disturbed with surrounding noise.

In the smartphone recorder according to an embodiment of the present disclosure, a switch receiving hole may be defined in an outer surface of the rear casing such that the switch is received in the switch receiving hole so as to be exposed to the outside. In addition, a predetermined step may be further formed along an outer periphery of the switch receiving hole. Thus, due to the step, the user may move the slide button in a sliding manner in a predetermined direction while easily pressing the slide button using the user's finger, thereby improving convenience of the manipulation of the switch. The switch receiving hole may have a shape corresponding to a shape of an inclined guide hole along which the slide button moves in a diagonal direction.

In the smartphone recorder according to an embodiment of the present disclosure, the rear casing may further include an arc support portion protruding in an arc shape. The arc support portion may contact and support a portion of an outer circumference of the first magnet having a ring shapes so as to prevent the first magnet from deviating from a predetermined position or being displaced, thereby firmly adhering and fixing the casing body to the rear surface of the smartphone through a strong magnetic force. One end of the arc support portion may be positioned at a position corresponding to an upper end position of the first magnet, and the other end of the arc support portion may be positioned in a position corresponding to one side of the first magnet, for example, a right end position thereof.

### TECHNICAL EFFECT

According to an embodiment of the present disclosure, the smartphone recorder may be conveniently attached to and detached from the smartphone (e.g. an iPhone, etc.) using the magnet without using a complex coupling structure, thereby improving user convenience.

In addition, according to an embodiment of the present disclosure, when the smartphone recorder is attached to the smartphone (e.g. an iPhone, etc.), the smartphone recorder may not deteriorate the appearance of the smartphone itself and the user may feel a sense of unity of the smartphone recorder and the smartphone in terms of the design.

In addition, according to an embodiment of the present disclosure, the smartphone recorder may be attached to and detached from the rear surface of a smartphone (e.g. iPhone, etc.) so as to deteriorate the manipulation of the smartphone by the user, and further may record the call content accurately using the sensor, that is, the piezoelectric sensor capable of reading the call content as the vibration data without being disturbed with external noise.

In addition to the above-described effects, specific effects of the present disclosure will be described together with the detailed descriptions as set forth below.

### BRIEF DESCRIPTION OF DRAWINGS

FIG. 1 is a front perspective view schematically illustrating a smartphone recorder according to an embodiment of the present disclosure.
FIG. 2 is a rear perspective view schematically illustrating a smartphone recorder according to an embodiment of the present disclosure.
FIG. 3 is a bottom view of a smartphone recorder according to an embodiment of the present disclosure.
FIG. 4 is a view illustrating an outer appearance of a cover of a smartphone recorder according to an embodiment of the present disclosure.
FIG. 5 is a view illustrating an internal shape of a cover of a smartphone recorder according to an embodiment of the present disclosure.
FIG. 6 is a view illustrating an internal state in which a cover is removed from a smartphone recorder according to an embodiment of the present disclosure.
FIG. 7 is a front view illustrating an internal structure in which a cover and a casing are removed from a smartphone recorder according to an embodiment of the present disclosure.
FIG. 8 is a rear view illustrating an internal structure in which a cover and a casing are removed from a smartphone recorder according to an embodiment of the present disclosure.
FIG. 9 is a view illustrating an outer appearance of a casing of a smartphone recorder according to an embodiment of the present disclosure.
FIG. 10 is a view illustrating an internal shape of a casing of a smartphone recorder according to an embodiment of the present disclosure.
FIG. 11 is a front perspective view schematically illustrating a smartphone recorder according to an embodiment of the present disclosure.

### DETAILED DESCRIPTIONS

Hereinafter, embodiments of the present disclosure will be described in detail with reference to the accompanying drawings. The present disclosure may be implemented in various different forms and is not limited to the embodiments described herein.

In order to clearly describe the present disclosure, parts unrelated to the description have been omitted, and the same or similar components will be denoted by the same reference numerals throughout the present disclosure. Further, some embodiments of the present disclosure will be described in detail with reference to example drawings. When reference numerals are added to the elements of drawings, the same elements may be denoted by like reference numerals even when they are displayed in different drawings. Further, in the following descriptions of the present disclosure, a detailed description of known functions and configurations incorporated herein will be omitted when it may make the subject matter of the present disclosure rather unclear.

Terms such as first, second, A, B, (a), (b) or the like may be used herein when describing components of the present disclosure. These terms are only used to distinguish the components from other components, and the nature, the sequence, the order, or the number of the corresponding components are not limited by the terms. When a component is described as being "connected" or "coupled" to another component, it should be understood that the component may be directly connected or coupled to another component, or still another component may be interposed between the components, or the components may be connected or coupled to each other via still another component.

Further, in implementing the present disclosure, a component may be subdivided for convenience of descriptions. Components may be integrated into one device or module, or one component may be divided into a plurality of devices or modules.

Hereinafter, a smartphone recorder according to a preferred embodiment of the present disclosure will be described in detail with reference to the accompanying drawings.

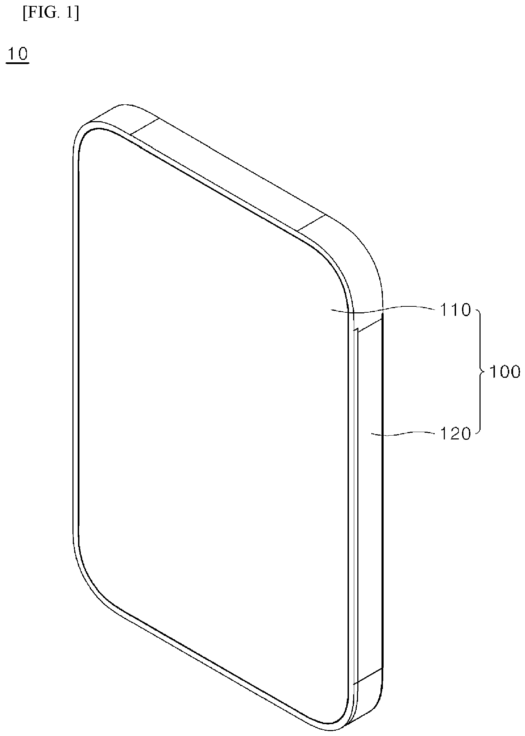

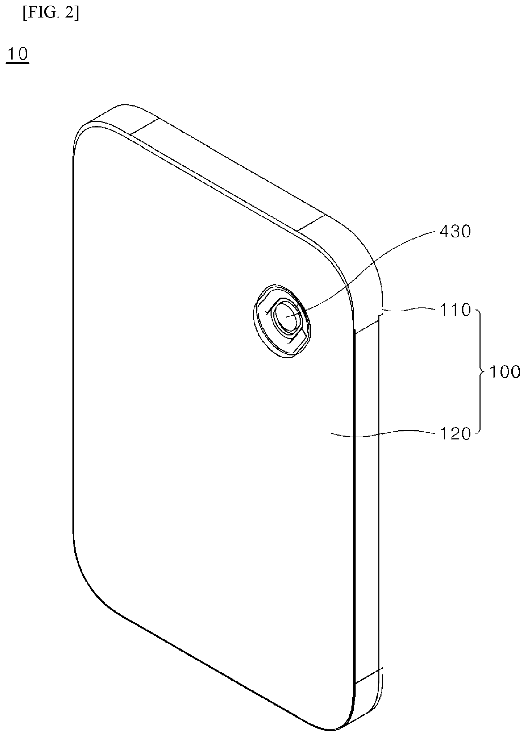

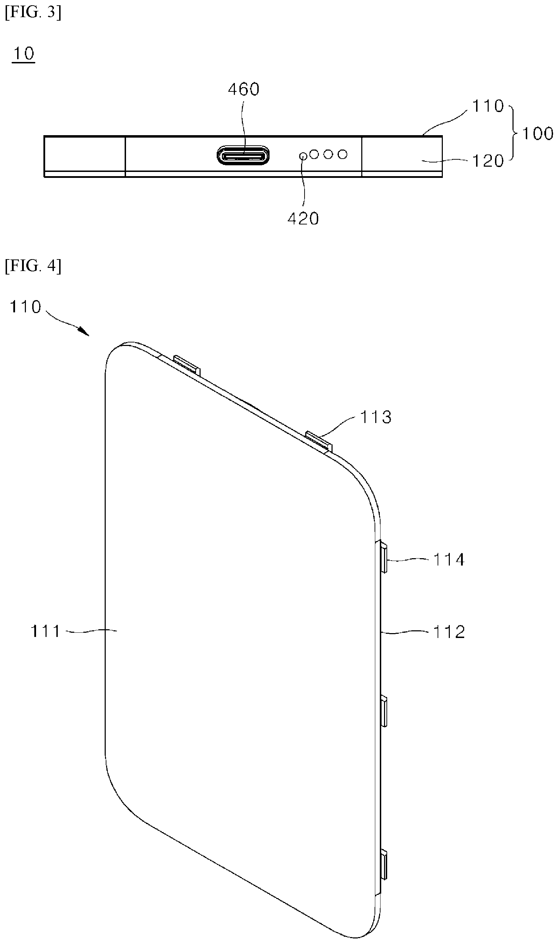

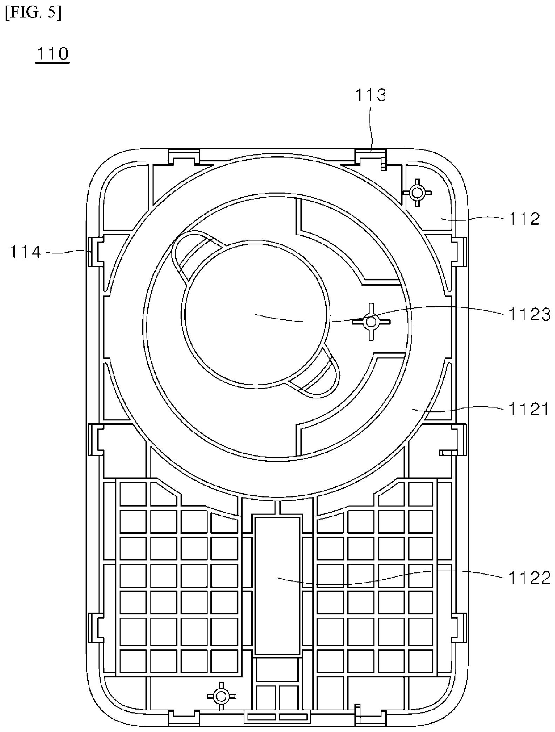

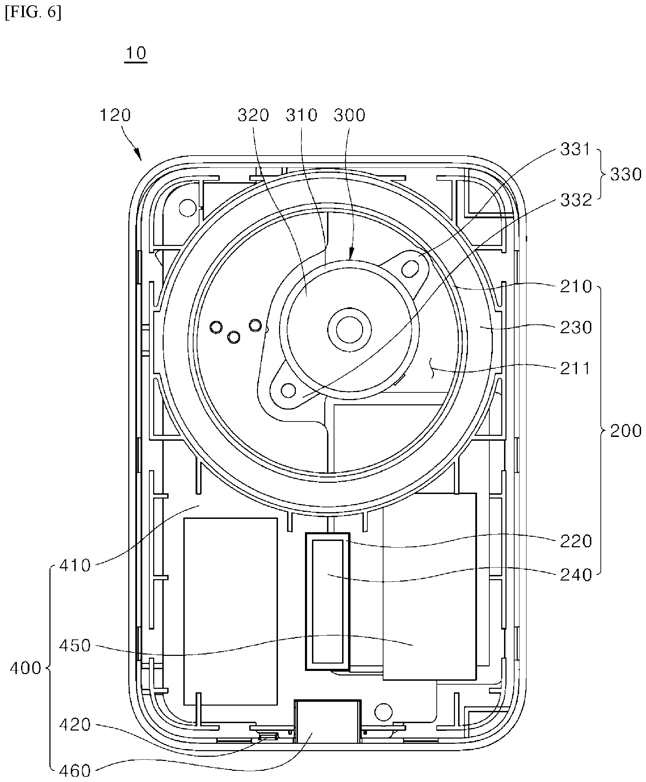

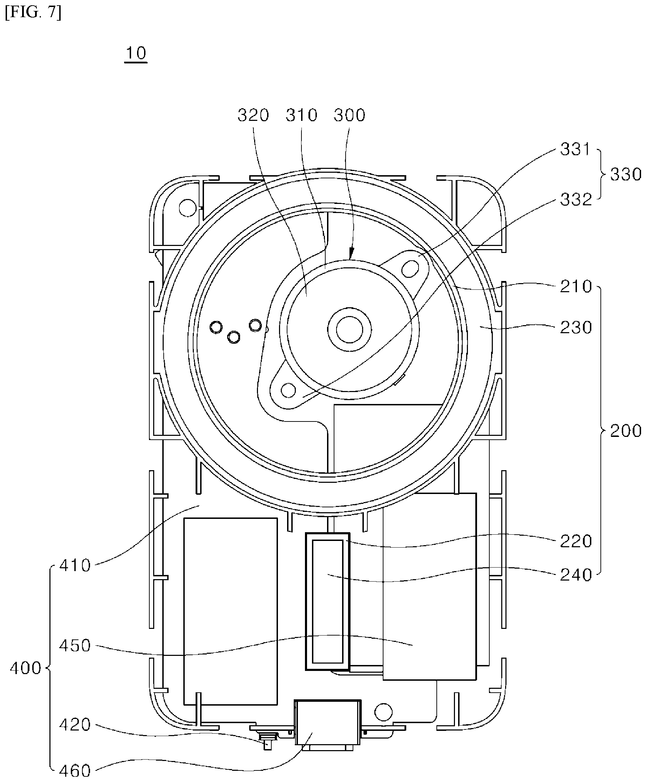

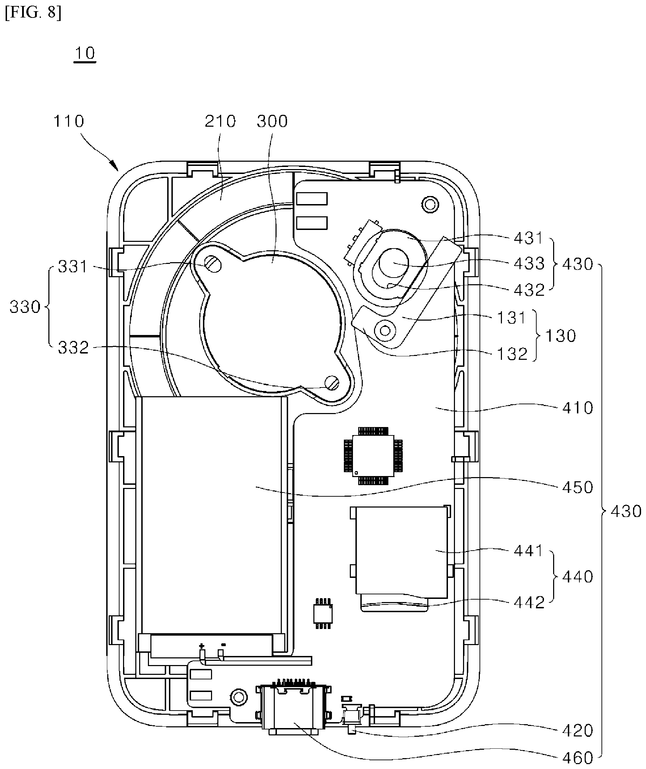

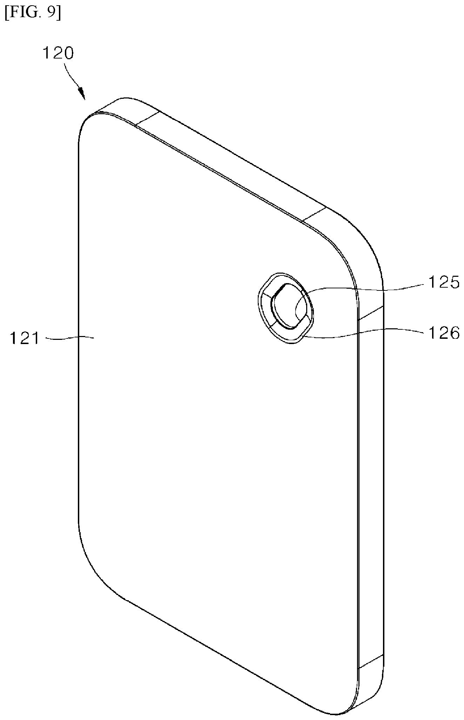

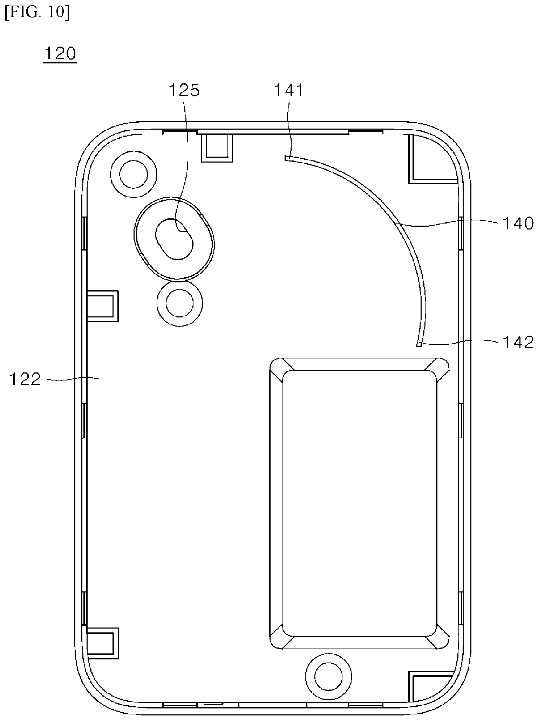

In the drawings, FIG. 1 is a front perspective view schematically illustrating a smartphone recorder according to an embodiment of the present disclosure. FIG. 2 is a rear perspective view schematically illustrating a smartphone recorder according to an embodiment of the present disclosure. FIG. 3 is a bottom view of a smartphone recorder according to an embodiment of the present disclosure. FIG. 4 is a view illustrating an outer appearance of a cover of a smartphone recorder according to an embodiment of the present disclosure. FIG. 5 is a view illustrating an internal shape of a cover of a smartphone recorder according to an embodiment of the present disclosure. FIG. 6 is a view illustrating an internal state in which a cover is removed from a smartphone recorder according to an embodiment of the present disclosure. FIG. 7 is a front view illustrating an internal structure in which a cover and a casing are removed from a smartphone recorder according to an embodiment of the present disclosure. FIG. 8 is a rear view illustrating an internal structure in which a cover and a casing are removed from a smartphone recorder according to an embodiment of the present disclosure. FIG. 9 is a view illustrating an outer appearance of a casing of a smartphone recorder according to an embodiment of the present disclosure. FIG. 10 is a view illustrating an internal shape of a casing of a smartphone recorder according to an embodiment of the present disclosure.

As illustrated, a smartphone recorder 10 according to an embodiment of the present disclosure includes a casing body 100, a magnet 200, an input unit (e.g. a piezoelectric sensor, a microphone, etc.) 300, and a recording unit 400.

The casing body 100 includes a front cover 110 attachable to and detachable from a rear surface of the smartphone, and a rear casing 120 coupled to a rear surface of the front cover 110 and having a receiving space defined therein.

The magnet 200 serves to attach the front cover 110 to the rear surface of the smartphone by using a magnetic force.

The input unit 300 receives voice information during a call of the smartphone. For example, the input unit 300 may include at least one of a microphone for receiving voice information and a piezoelectric sensor for receiving voice information as vibration data. In other words, the input unit 300 may be formed to include a piezoelectric sensor or a microphone, or may be formed in a structure having both a piezoelectric sensor and a microphone.

The recording unit 400 may record voice information input from the input unit 300.

In a specific example, when the input unit 300 includes the piezoelectric sensor, the input unit, that is, the piezoelectric sensor 300, may receive voice information during a call transferred through the rear surface of the smartphone as vibration data when the front cover 110 is attached to the rear surface of the smartphone. The recording unit 400 may receive the vibration data input from the piezoelectric sensor 300 and convert the vibration data into voice data and collect the voice data.

Hereinafter, a detailed configuration of the front cover 110, the rear casing 120, the magnet 200, the piezoelectric sensor 300, and the recording unit 400 in the smartphone recorder 10 according to an embodiment of the present disclosure will be described in detail.

### [Front Cover]

The front cover 110 refers to a rigid member that is detachable from the rear surface of the smartphone.

Referring to FIG. 4, an outer surface 111 of the front cover 100 may be flat. Accordingly, the outer surface 111 of the front cover 110 may be smoothly adhered to the rear surface of the smartphone.

For example, the front cover 110 may have a rectangular shape in which a vertical length is larger than a horizontal width length. However, the shape is not necessarily limited to the illustrated shape, and may be changed to other shapes.

In addition, a plurality of first coupling protrusions 113 protruding outwardly for coupling with the rear casing 120 may be provided at an upper end and a lower end of the front cover 110. A plurality of second coupling protrusions 114 protruding outwardly for coupling with the rear casing 120 may be provided at both side ends of the front cover 110.

Referring to FIG. 5, an inner surface of the front cover 110 is shown. The inner surface 112 of the front cover 110 has a first close-contact receiving portion 1121 and a second close-contact receiving portion 1122.

The first close-contact receiving portion 1121 refers to a receiving area in which a first magnet 210 of the magnet 200 to be described later is adhered to a first magnet tape 230 and the first magnet 210 is in close contact with the inner surface 112 of the front cover 110 via the first magnet tape 230.

The second close-contact receiving portion 1122 refers to a receiving area in which the second magnet 220 of the magnet 200 to be described later is adhered to a second magnet tape 240 and the second magnet 220 is in close contact with the inner surface 112 of the front cover 110 via the second magnet tape 240.

In addition, a third close-contact receiving portion 1123 may be further provided on the inner surface 112 of the front cover 110.

The third close-contact receiving portion 1123 refers to a receiving area in which the piezoelectric sensor 300 is adhered to a sensor tape 320 and a sensor surface 310 of the piezoelectric sensor 300 is in close contact with the inner surface 112 of the front cover 110 via the sensor tape 320 such that the piezoelectric sensor 300 directly receive the vibration from the rear surface of the smartphone.

As described above, each of the first, second, and third close-contact receiving portions 1121, 1122 and 1123 may have a size and a shape correspond to a size and a shape of each of the first and second magnets 210 and 220 and the sensor surface 310 of the piezoelectric sensor 300. Thus, each of the first and second magnets 210 and 220 and the piezoelectric sensor 300 may be stably disposed at a predetermined position and firmly attached to the inner surface 112 of the front cover 110. Accordingly, an attachment force using the magnetic force by the first and second magnets 210 and 220 may be improved, and measurement accuracy of the piezoelectric sensor 300 directly reading the rear vibration of the smartphone may be improved, thereby improving the function of recording the call voice. As a result, there is an advantage in that clean recording may be achieved without being disturbed with surrounding noise.

In addition, the third close-contact receiving portion 1123 may further include a circular protrusion 1124 surrounding an outer circumference of the sensor surface 310 of the piezoelectric sensor 300 in the circumferential direction thereof and supporting the sensor surface 310 of the piezoelectric sensor 300 along the circumferential direction thereof to prevent movement of the piezoelectric sensor 300.

The circular protrusion 1124 may provide a function of completely preventing a movement of the piezoelectric sensor 300 such that the piezoelectric sensor 300 is not shaken in up, down, left, and right directions within the casing body 100. Accordingly, the sensor surface 310 of the piezoelectric sensor 300 may be prevented from moving in the up, down, left, and right directions, such that the piezoelectric sensor 300 more accurately reads the vibration transmitted through the rear surface of the smartphone. As a result, the smartphone recorder may accurately record the call voice without being disturbed with surrounding noise.

### [Rear casing]

The rear casing 120 may be coupled to the rear surface of the front cover 110 and may have a receiving space defined therein.

Referring to FIG. 9, a switch receiving hole 125 is defined in an outer surface of the rear casing 120 such that a switch, more specifically, a slide button 433 is received in the switch receiving hole 125 so as to be exposed to the outside.

In addition, a predetermined step 126 may be further formed along an outer periphery of the switch receiving hole 125. The step 126 surrounds the switch receiving hole 126 and is recessed by a predetermined depth. Thus, due to the step 126, the user may move the slide button 433 in a sliding manner in a predetermined direction while easily pressing the slide button 433 using the user's finger.

For example, the switch receiving hole 125 may have a shape corresponding to a shape of an inclined guide hole 432 which will be described later so as to cope with the sliding movement of the slide button 433 in a diagonal direction.

In one example, referring to FIG. 10, the rear casing 120 may further include an arc support portion 140 protruding in an arc shape.

The arc support portion 140 may contact and support a portion of an outer circumference of the first magnet 210 having a ring shapes so as to prevent the first magnet 210 from deviating from a predetermined position or being displaced, thereby firmly adhering and fixing the casing body 100 to the rear surface of the smartphone through a strong magnetic force.

For example, one end 141 of the arc support portion 140 may be positioned at a position corresponding to an upper end position of the first magnet 210, and the other end 142 of the arc support portion 140 may be positioned in a position corresponding to one side of the first magnet 210, for example, a right end position thereof. The arc support portion 140 may have an arc shape having a central angle of 90 degrees. Accordingly, a partial arc area including the upper end and the one side of the first magnet 210 may be stably position-restricted by the arc support part 140, and thus a position aligned state and the fixed state of the first magnet 210 may be firmly maintained.

### [Magnet]

The magnet 200 may attach the casing body 100, particularly, the front cover 110 of the casing body 100 to the rear surface of the smartphone by using a magnetic force.

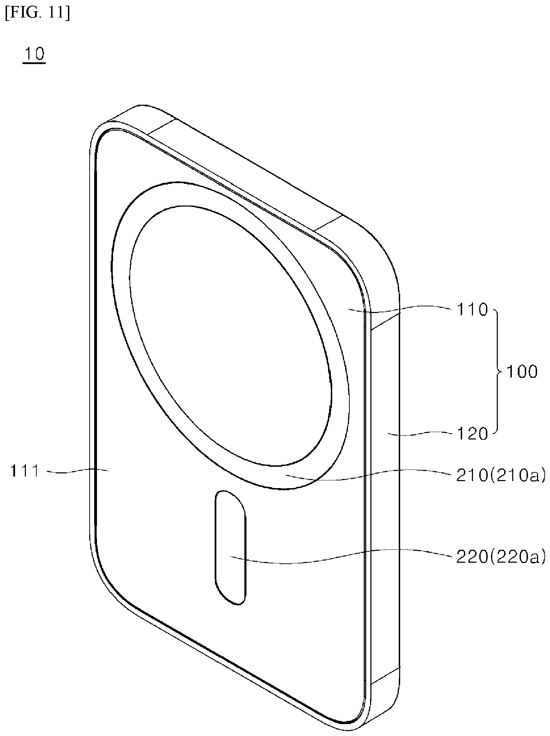

In the smartphone recorder 1 according to the present disclosure, in one embodiment (see FIG. 1), the magnet 200 may be attached to the inner surface of the front cover. Alternatively, in another embodiment (see FIG. 11), the magnet 200 may be attached to the outer surface of the front cover.

According to an embodiment of the present disclosure, the magnet 200 includes the first magnet 210 positioned on an upper portion of the front cover 110 and the second magnet 220 positioned on a lower portion of the front cover 110 (see FIG. 11).

The first magnet 210 may be attached to an upper portion of an outer surface 111 of the front cover 110, and may have a ring shape having a diameter corresponding to a horizontal width size of the front cover 110.

The second magnet 220 may be attached to a lower portion of the outer surface 111 of the front cover 110, and may have a bar shape vertically extending in an elongate manner so as to have a predetermined length and may be positioned at a center in a left-right width direction of the front cover 110.

Metal stickers 210a and 220a may be attached to the outer surface of the first magnet 210 and the second magnet 220, respectively. When the first and second magnets 210 and 220 are attached to the outer surface of the front cover 110, the metal stickers 210a and 220a may respectively prevent the first and second magnets 210 and 220 from being exposed to the outside.

According to an embodiment of the present disclosure, the magnet 200 includes the first magnet 210 positioned in an upper portion of the receiving space of the rear casing 120 and the second magnet 220 positioned in a lower portion of the receiving space of the rear casing 120 (see FIGS. 6 to 8).

The first magnet 210 may be in close contact with an upper portion of the inner surface 112 of the front cover 110, and may be formed in a ring shape having a diameter corresponding to the horizontal width size of the front cover 110.

The second magnet 220 may be in close contact with a lower portion of the inner surface 112 of the front cover 110, and may have a bar shape vertically extending in an elongate manner so as to have a predetermined length and may be positioned at the center in the left-right width direction of the front cover 110.

Each of the first and second magnets 210 and 220 may have an appropriate position, shape, and size determined so as to firmly attach the front cover 110 to the rear surface of the smartphone using the magnetic force. Accordingly, the position, shape, and size of each of the first and second magnets 210 and 220 may be appropriately changed according to the specifications of the smartphone.

Specifically, the first magnet 210 and the second magnet 220 should be attached to the inner surface of the front cover 110 in a firmly close-contact state therewith. To this end, the first magnet tape 230 and the second magnet tape 240 may be used.

The first magnet tape 230 may firmly adhere the first magnet 210 to the upper portion of the inner surface 112 of the front cover 110.

The second magnet tape 240 may firmly adhere the second magnet 220 to the lower portion of the inner surface 112 of the front cover 110.

For example, the first magnet tape 230 may have a ring shape having a diameter corresponding to that of the first magnet 210. Accordingly, the first magnet 210 may be easily attached and fixed to the upper portion of the inner surface of the front cover 110 with a stronger adhesive force.

In addition, the second magnet tape 240 may have a bar shape having a length corresponding to that of the second magnet 220. Accordingly, the second magnet 210 may be attached and fixed to the lower portion of the inner surface of the front cover 110 with a stronger adhesive force.

### [Piezoelectic sensor]

When the front cover 110 is attached to the rear surface of the smartphone, the piezoelectric sensor 300 is configured to receive a call content, that is, a voice transmitted through the rear surface of the smartphone as the vibration data.

The piezoelectric sensor 300 may include a piezoelectric element and may read vibration of an object surface. In an embodiment of the present disclosure, the voice generated through the rear surface of the smartphone during the call may be read as the vibration data using the piezoelectric sensor 300. In other words, vibration of a speaker embedded in the smartphone may be directly read using the piezoelectric sensor 300 in close contact with the rear surface of the smartphone.

When the front cover 110 of the casing body 100 is firmly adhered to the rear surface of the smartphone using the magnetic force of the magnet 200, the smartphone recorder may directly read the vibration using the piezoelectric sensor 300 attached to the front cover 110 and may record the call voice based on the vibration.

In particular, since the piezoelectric sensor 300 is insensitive to vibration in the air, there is an advantage in that clean recording may be achieved without being disturbed with surrounding noise, and the call recording quality is superior to that in a conventional approach using a microphone.

The piezoelectric sensor 300 is positioned inside the receiving space of the rear casing 120 and includes the sensor surface 310 that is in close contact with the inner surface 112 of the front cover 110 (see FIGS. 6 to 8).

Preferably, the piezoelectric sensor 300 may be positioned in a hollow 211 defined in the first magnet 210.

The piezoelectric sensor 300 may be positioned in the inner hollow 211 of the ring-shaped first magnet 210. Accordingly, the sensor surface 310 may be more firmly adhered to the inner surface of the front cover 110 attached to the rear surface of the smartphone via the first magnet 210 such that the piezoelectric sensor 300 may accurately read the vibration directly through the sensor surface 310. Accordingly, excellent call recording quality may be secured without being disturbed with surrounding noise.

In addition, the sensor tape 320 may be used to more firmly adhere the sensor surface 310 of the piezoelectric sensor 300 to the front cover 110 without a gap therebetween.

The sensor tape 320 may be firmly adhered to the inner surface 112 of the front cover 110 while the piezoelectric sensor 300 is positioned in the inner hollow 211 of the first magnet 210

For example, the sensor tape 320 may have a circular shape having a diameter corresponding to that of the sensor surface 310.

As described above, the front cover 110 is strongly attached to the rear surface of the smartphone via the first magnet 210, and the piezoelectric sensor 300 is positioned in the inner hollow 211 of the first magnet 210 and, at the same time, is strongly attached to the inner surface of the front cover 110 via the circular sensor tape 320, thereby improving the performance of reading the vibration using the piezoelectric sensor 300 and thus securing excellent call voice recording quality.

In addition, the piezoelectric sensor 300 further includes a sensor fixing structure 330. After the piezoelectric sensor 300 is positioned at a set position in the inner hollow 211 of the first magnet 210, the sensor fixing structure 330 firmly fastens the piezoelectric sensor 300 thereto to more firmly fix the piezoelectric sensor 300.

For example, the sensor fixing structure 330 includes a first sensor fixing structure 331 protruding outwardly from a position of an outer circumference of the piezoelectric sensor 300 such that a distal end thereof is in contact with an inner circumferential surface of the first magnet 210, and a second sensor fixing structure 332 protruding outwardly from another position of the outer circumference of the piezoelectric sensor 300, wherein the first sensor fixing structure 331 and the second sensor fixing structure 332 are arranged in a symmetrical manner with each other around a center of the piezoelectric sensor 300. The first and second sensor fixing structures 331 may fix the piezoelectric sensor 300 more stably in the hollow 211 of the first magnet 210. Accordingly, the shaking of the piezoelectric sensor 300 may be suppressed, and the vibration transferred through the rear surface of the smartphone may be more accurately read through the sensor surface 310.

### [Recording Unit]

The recording unit 400 may receive the vibration data input from the piezoelectric sensor 300 and convert the vibration data into voice data and collect the converted voice data.

The recording unit 400 includes a circuit board 410, a switch 430, a communication terminal 460, and data storage 440.

The circuit board 410 may include a circuit that is positioned inside the receiving space of the casing body 100, for example, the rear casing 120, and is configured to collect the vibration data input to the piezoelectric sensor 300 and convert the vibration data into the voice data. For example, the circuit board 410 may further include a commonly known amplifier for converting the vibration data collected from the piezoelectric sensor 300 into voice data.

The switch 430 may be electrically connected to the circuit board 410 and may turn on/off a recording operation.

The communication terminal 460 may be electrically connected to the circuit board 410.

The data storage 440 may store therein the voice data converted by the circuit board 410.

For example, the data storage 440 includes a data storage socket 441 electrically connected to the circuit board 410 and a data storage medium 442 mountable into the data storage socket 441.

The data storage medium 442 may include a flash memory card. For example, an SD credit card or the like may be used as the flash memory card.

The communication terminal 460 may be positioned at a center of a lower end of the rear casing 120 (see FIG. 3). For example, the communication terminal 460 may be provided in a form of an 8-pin lightning mount. However, the present disclosure is not necessarily limited thereto, and communication terminals of various other standards may be used.

In one example, the smartphone recorder 10 according to an embodiment of the present disclosure further includes a battery 450. The battery 450 may be positioned in the receiving space of the casing body 100, particularly, the rear casing 120. The battery 450 may supply power to the recording unit 400 and the piezoelectric sensor 300.

In one example, the smartphone recorder 10 according to an embodiment of the present disclosure further includes a feedback unit 420.

The feedback unit 420 may be electrically connected to the circuit board 410. The feedback unit 420 may provide feedback about the recording operation and the charged state of the battery 450 to the user in various manners.

For example, the feedback unit 420 may include at least one LED capable of emitting or turning on/off light of a predetermined color (e.g., red, etc.). The feedback unit 420 including at least one LED may be disposed to be spaced apart from the communication terminal 460 by a set distance, and may be exposed to the outside out of the casing body 100 so as to emit light to the outside or turn on or off the lighting.

The switch 430 may be electrically connected to the circuit board 410 and may move in a sliding manner in a set direction to turn on/off the recording operation.

Preferably, the switch 430 may be installed at an upper end of one side of the circuit board 410.

For example, when the piezoelectric sensor 300 is positioned in a position closer to a left side of the rear casing 120, the switch 430 may be positioned close to an upper corner of a right side of the rear casing 120 while being spaced by a predetermined distance from the piezoelectric sensor 300. Accordingly, the user can easily slide the switch 430 using one finger while the smartphone recorder 10 is attached to the rear surface of the smartphone.

Specifically, the switch 430 includes a switch body 431 and the slide button 433 (see FIGS. 8 and 9).

The switch body 431 may include the inclined guide hole 432 extending in the diagonal direction and positioned closer to the upper end of the rear casing 120.

The slide button 433 may extend through the inclined guide hole 432 and protrude rearwardly, and may slidably move in the diagonal direction along the inclined guide hole 432 to turn on/off the recording operation.

Accordingly, when the user makes a call with a counterpart while holding the smartphone with one hand, the user may easily slide the slide button 433 on the smartphone recorder 10 attached to the rear surface of the smartphone in the diagonal direction.

If the sliding direction of the slide button 433 is the left-right width direction or the vertical-longitudinal direction of the rear casing 120, it is difficult to move the slide button in the left-right or up-down direction using one finger, in particular, an index finger, while gripping the smartphone with one hand.

However, according to the embodiment of the present disclosure, the slide button 433 does not move in the left-right or up-down direction of the smartphone, but the slide button 433 can slidably move along the inclined guide hole 432 extending in the diagonal direction, so that the slide button 433 can be quickly and conveniently manipulated by using an index finger or the like without putting a stress on the joint of the finger of the user.

In one example, the switch 430 may be fixed by a switch holder 130 (see FIG. 8).

The switch holder 130 may fix the switch 430 to an upper end of one side of the circuit board 410.

For example, the switch holder 130 includes a first holder 131 and a second holder 132.

The first holder 131 extends diagonally along the movement direction of the slide button 433 so as to stop the movement of one side of the switch body 431.

The second holder 132 acts as a support member connected to one end of the first holder 131 and extending in a direction perpendicular manner to the extending direction of the first holder. The second holder 132 has a length smaller than that of the first holder 131, and stops the movement of the other side of the switch body 431 of which one side is stopped by the first holder 131.

As described above, the switch main body 431 is stably mounted onto the circuit board 410 while being stopped by the switch holder 130. In particular, the switch main body 431 is more firmly stopped by the first and second holders 131 and 132 that are connected to each other and extend in the perpendicular manner to each other, thereby preventing failure or malfunction even when the slide button 433 is repeatedly manipulated, thereby increasing durability thereof.

In the smartphone recorder 10 according to an embodiment of the present disclosure, the recording operation may be turned on/off only when the user slides the slide button 433 in a predetermined direction (e.g. a diagonal direction, etc.) rather than the switch is manipulated in a pressed manner to turn on/off the recording operation. Accordingly, a situation may be prevented in which unintentionally, the switch may be pressed such that the recording operation is executed. In addition, only when the slide button 433 moves in the sliding manner in the diagonal direction, the recording operation may be turned on/off, such that the malfunction due to the mistake may be improved, thereby preventing unnecessary waste of the battery.

According to the configuration and the operation of the smartphone recorder of the present disclosure as described above, the smartphone recorder may be conveniently attached to and detached from the smartphone (e.g. an iPhone, etc.) using the magnet without using a complex coupling structure, thereby improving user convenience.

In addition, when the smartphone recorder is attached to the smartphone (e.g. an iPhone, etc.), the smartphone recorder may not deteriorate the appearance of the smartphone itself and the user may feel a sense of unity of the smartphone recorder and the smartphone in terms of the design.

In addition, the smartphone recorder may be attached to and detached from the rear surface of a smartphone (e.g. iPhone, etc.) so as to deteriorate the manipulation of the smartphone by the user, and further may record the call content accurately using the sensor, that is, the piezoelectric sensor capable of reading the call content as the vibration data without being disturbed with external noise.

Although the present disclosure has been described above with reference to the drawings, it is apparent that the present disclosure is not limited by the embodiments disclosed in the present disclosure and the drawings, and various modifications may be made thereto by a person skilled in the art within the scope of the technical idea of the present disclosure.

## Claims

1. A smartphone recorder comprising:
a casing body including:
a front cover attachable to and detachable from a rear surface of a smartphone; and
a rear casing coupled to a rear surface of the front cover and having a receiving space defined therein;
a magnet for attaching the front cover to the rear surface of the smartphone using a magnetic force;
an input unit for receiving voice information during a call of the smartphone; and
a recording unit for recording the voice information input to the input unit.

2. The smartphone recorder of claim 1, wherein the input unit includes at least one of:
a microphone for receiving the voice information; and
a piezoelectric sensor configured to receive the voice information as vibration data.

3. The smartphone recorder of claim 2, wherein the piezoelectric sensor is configured to receive the voice information transferred through the rear surface of the smartphone during the call as the vibration data when the front cover is attached to the rear surface of the smartphone,
wherein the recording unit is configured to receive the vibration data input from the piezoelectric sensor, to convert the vibration data into voice data, and to collect the converted voice data.

4. The smartphone recorder of claim 2, wherein the magnet includes:
a first magnet positioned on an upper portion of the front cover; and
a second magnet positioned on a lower portion of the front cover.

5. The smartphone recorder of claim 4, wherein the first magnet is attached to an upper portion of an outer surface of the front cover, and has a ring shape having a diameter corresponding to a left-right directional width of the front cover,
wherein the second magnet is attached to a lower portion of the outer surface of the front cover, and is formed in a bar shape vertically extending in an elongate manner so as to have a predetermined length and is positioned at a center in a left-right direction of the front cover,
wherein a metal sticker is attached to an outer surface of each of the first magnet and the second magnet.

6. The smartphone recorder of claim 2, wherein the magnet includes:
a first magnet positioned in an upper portion of the receiving space; and
a second magnet positioned in a lower portion of the receiving space.

7. The smartphone recorder of claim 6, wherein the first magnet is in close contact with an upper portion of an inner surface of the front cover, and has a ring shape having a diameter corresponding to a left-right directional width of the front cover,
wherein the second magnet is in close contact with a lower portion of the inner surface of the front cover, and is formed in a bar shape vertically extending in an elongate manner so as to have a predetermined length and is positioned at a center in a left-right direction of the front cover.

8. The smartphone recorder of claim 7, wherein the piezoelectric sensor includes a sensor surface located in the receiving space and in close contact with the inner surface of the front cover.

9. The smartphone recorder of claim 3, wherein the recording unit includes:
a circuit board located in the receiving space and configured to collect the vibration data input to the piezoelectric sensor and to convert the vibration data into the voice data;
a switch electrically connected to the circuit board and configured to turn on/off a recording operation;
a communication terminal electrically connected to the circuit board; and
data storage for storing therein the voice data converted by the circuit board.

10. The smartphone recorder of claim 9, wherein the smartphone recorder further comprises a battery located in the receiving space and configured to supply power to the recording unit and the piezoelectric sensor.

11. The smartphone recorder of claim 9, wherein the smartphone recorder further comprises a feedback unit electrically connected to the circuit board and configured to provide feedback about a recording operation and a charged state of the battery.

12. The smartphone recorder of claim 9, wherein the communication terminal is positioned at a center of a lower end of the rear casing,
wherein the feedback unit is spaced from the communication terminal from a predefined spacing and is exposed to an outside.

13. The smartphone recorder of claim 9, wherein the switch moves in a sliding manner in a predefined direction to turn on/off the recording operation.
